# FASCICULE DE BREVET EUROPEEN

(11) **EP 1 523 265 B1**
(45) Date de publication et mention de la délivrance du brevet: **22.11.2006**
(21) Numéro de dépôt: 03748213.0
(22) Date de dépôt: 16.07.2003
(51) Int. Cl.: A47J 45/10

(54) **DISPOSITIF DE PREHENSION AMOVIBLE ET ADAPTABLE A DIFFERENTES EPAISSEURS DE RECIPIENT**
ABNEHMBARES GRIFFELEMENT ZUM ANBRINGEN AN BEHÄLTER VON VERSCHIEDENEN DICKEN
REMOVABLE GRIP HANDLE DEVICE ADAPTABLE TO CONTAINERS OF DIFFERENT THICKNESS

(30) Priorité: 24.07.2002 FR 0209384
(43) Date de publication de la demande: 20.04.2005
(73) Titulaire: SEB SA, 69130 Ecully (FR)
(72) Inventeur: LORTHIOIR, Christophe, 74150 Bloye (FR); MONTGELARD, Michel, F-74960 Cran Gevrier (FR)
(74) Mandataire: Pichat, Thierry
(86) Numéro de dépôt international: PCT/FR2003/002250
(87) Numéro de publication internationale: WO 2004/010832

(56) Documents cités:
- FR-A- 2 739 772
- FR-A- 2 768 914
- US-B1- 6 257 439
- PATENT ABSTRACTS OF JAPAN vol. 2000, no. 25, 12 avril 2001 (2001-04-12) & JP 2001 224514 A (BEISHITEI:KK), 21 août 2001 (2001-08-21)
- PATENT ABSTRACTS OF JAPAN vol. 2002, no. 06, 4 juin 2002 (2002-06-04) & JP 2002 034804 A (SEISHO MAATO:KK), 5 février 2002 (2002-02-05)

## Description

La présente invention concerne un dispositif de préhension amovible pour récipient, notamment un manche amovible pour casserole, et adaptable à différentes épaisseurs de récipient.

On connaît un dispositif de préhension amovible pour récipient, du type comprenant deux organes formant pince montés sur un corps de préhension, l'un des organes formant pince étant mobile en translation par rapport au corps de préhension, selon une direction sensiblement parallèle à la direction longitudinale du corps de préhension, entre une position ouverte et une position fermée dans laquelle les organes formant pince sont adaptés à pincer un rebord du récipient, le dispositif de préhension amovible comprenant des moyens de déplacement qui sont adaptés à déplacer les organes formant pince l'un par rapport à l'autre, qui comportent un levier monté mobile en rotation par rapport au corps de préhension entre une position déployée et une positon escamotée dans laquelle l'organe mobile formant pince est en position fermée, et un moyen de transmission s'étendant entre le levier et l'organe mobile formant pince adapté à déplacer l'organe mobile formant pince en translation quand le levier est pivoté, et qui sont adaptés à ajuster la distance séparant les deux organes formant pince à l'épaisseur du récipient pincé.

De tels dispositifs amovible de préhension sont décrits dans les demandes de brevet FR 2 739 772 et FR 2 768 914.

Dans le document FR 2 739 772, le dispositif de préhension amovible comprend un moyen de blocage adapté à empêcher l'écartement de l'organe mobile formant pince quand l'organe mobile formant pince est en position fermée. Ce moyen étant formé par deux crémaillères disposées sur le levier et sur l'organe mobile formant pince et adaptées à s'engrener l'une à l'autre afin de maintenir l'organe mobile formant pince dans sa position.

Toutefois, l'efficacité de ce moyen de blocage est limité pour des écartements des organes formant pince en position fermée pour lesquels les deux crémaillères sont parfaitement situées l'une par rapport à l'autre de façon à réaliser une coopération parfaite par engrenage, c'est à dire quand les sommets d'une première crémaillère se trouvent exactement dans les fonds de l'autre crémaillère. De plus, le système de crémaillères ne permet pas d'avoir un moyen de blocage efficace quand le récipient porte une forte charge.

Ainsi, les dispositifs de préhension amovible de l'art antérieur permettant l'ajustement de la distance séparant les deux organes formant pince en position fermée à l'épaisseur du récipient pincé, ne peuvent empêcher qu'une forte charge du récipient pincé peut avoir un effet de levier sur les deux organes formant pince et, de ce fait, peut les écarter l'un de l'autre (jusqu'à la distance correspondant à l'épaisseur maximale des récipients pouvant être pincés), entraînant ainsi la séparation du récipient au dispositif de préhension (surtout si le récipient a un rebord de faible épaisseur), ce qui fait prendre un risque à l'utilisateur de recevoir le contenu du récipient qu'il est en train de soulever sur lui-même et donc de se brûler si le récipient était sur une plaque chauffante.

Un problème posé est de réaliser un dispositif de préhension amovible dont les organes formant pince en position fermée ne peuvent être déplacés vers une position fermée adaptée à pincer un récipient ayant un rebord plus épais, et ceci même si les moyens de déplacement sont adaptés à ajuster la distance séparant les organes formant pince en position fermée à l'épaisseur du rebord pincé.

La solution proposée à ce problème est un dispositif de préhension amovible du type précité dont le moyen de blocage comprend un pion de blocage monté sur les moyens de déplacement et adapté à pénétrer, quand le levier est en position escamotée, dans un logement.

Ainsi, bien que le dispositif de préhension est conformé de telle sorte que la distance séparant les deux organes formant pince en position fermée varie afin de pouvoir pincer des rebords de récipient d'épaisseur variable, une fois le rebord du récipient pincé, le pion de blocage est disposé dans un logement ce qui permet d'assurer un blocage efficace des deux organes formant pince.

Selon un mode de réalisation particulier, le dispositif de préhension comprend un arbre autour duquel sont articulés le levier et le moyen de transmission, qui est situé à proximité de l'extrémité du levier opposée à celle par laquelle le levier est relié au corps de préhension, et qui est mobile en translation dans une fente réalisée dans le moyen de transmission à proximité de l'extrémité du moyen de transmission opposée à celle par laquelle le moyen de transmission est relié à l'organe mobile formant pince.

Par cet agencement particulier des moyens de déplacement, le dispositif de préhension peut pincer de façon sûre des rebords de récipient dont l'épaisseur peut varier selon une plage relativement importante, entre 0,5 et 3,5 mm (ce qui correspond sensiblement à l'amplitude de mouvement de l'arbre dans la fente).

Selon un autre mode de réalisation, le levier et le moyen de transmission sont de longueur réduite, ce qui permet à l'utilisateur d'avoir toujours une emprise sur le corps de préhension par son annulaire et son auriculaire, seuls l'index et le majeur étant disposés au niveau du levier, et ce qui diminue l'amplitude du mouvement du levier.

Selon un autre agencement particulier un ressort à boudin, logé dans le moyen de transmission, est utilisé comme moyen élastique du mécanisme à genouillère. De ce fait, contrairement aux dispositifs de préhension de l'art antérieur comprenant un ressort à lame formant bielle, il n'y a pas de risque de détérioration quand le rebord du récipient pincé est de forte épaisseur.

La faible amplitude du mouvement du levier permet de munir le levier et le moyen de transmission de parois verticales agencées de sorte que, même quand le levier est en position déployée, l'ensemble du mécanisme est masqué et protégé de tout encrassement.

La présence des moyens de blocage, conformément à la présente invention, est particulièrement bien adaptée à un dispositif dont le moyen élastique du mécanisme à genouillère est un ressort à boudin qui, contrairement au ressort à lame, est plus élastique, et en contrepartie moins résistant à la pression exercée par le récipient pincé par les organes formant pince et qui, en conséquence, est moins adapté à empêcher, seul, tout écartement de ces organes formant pince.

D'autres particularités de l'invention résulteront de la description détaillée qui va suivre.

Aux dessins annexés à titre d'exemple non limitatif :
- La figure 1 est une vue éclatée en perspective d'un dispositif de préhension amovible conforme à la présente invention ;
- La figure 2 est une vue en coupe longitudinale d'un dispositif de préhension amovible, les organes formant pince étant en position fermée ;
- La figure 3 est une vue en coupe longitudinale d'un dispositif de préhension amovible, les organes formant pince étant en position ouverte ; et
- La figure 4 est une vue en coupe d'un pion de blocage selon la présente invention.

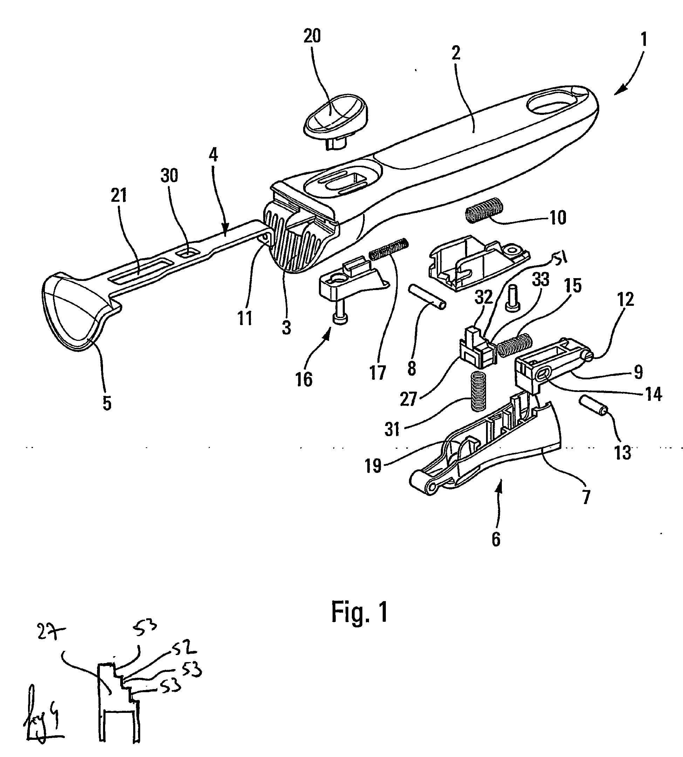

Comme on peut le voir à la figure 1, un dispositif de préhension amovible 1 pour récipient (par exemple un manche amovible pour une casserole) comprend un corps de préhension 2 sur lequel sont montés deux organes formant pince 3,4.

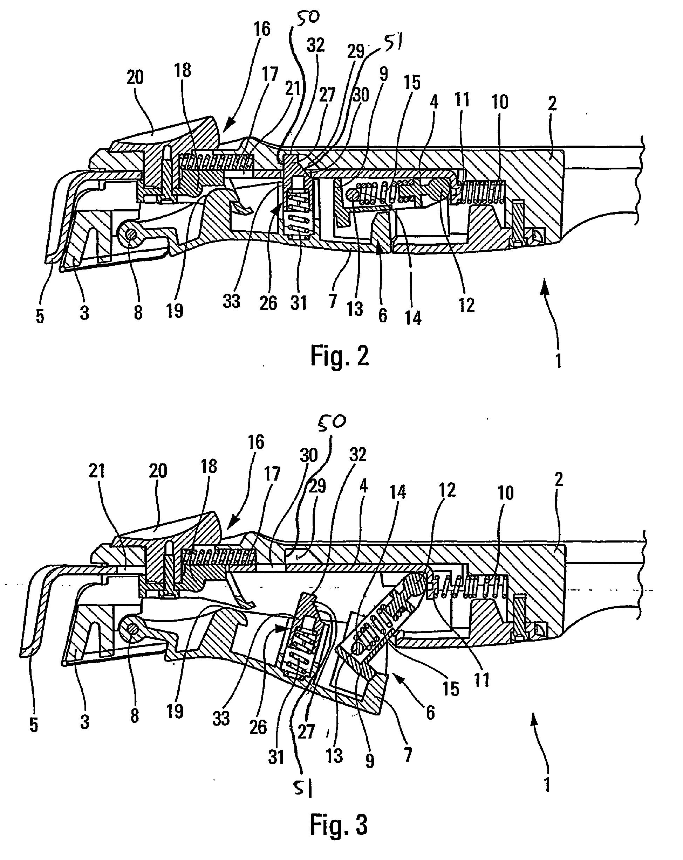

Un premier organe formant pince 3 est fixé à une extrémité du corps de préhension 2, et le second organe formant pince 4 est monté mobile en translation par rapport au corps de préhension 2, entre une position ouverte (figure 3) et une position fermée (figure 2).

L'organe mobile formant pince 4 comprend une extrémité de serrage 5 qui est adaptée, avec l'organe fixe formant pince 3, à pincer un rebord du récipient quand l'organe mobile formant pince 4 est en position fermée.

Dans le présent mode de réalisation, l'organe fixe formant pince 3 et l'extrémité de serrage 5 de l'organe mobile formant pince 4 sont conformées de façon à pouvoir pincer des récipients dont l'extrémité supérieure du rebord est incurvée vers l'extérieur et forme ainsi une courte collerette courbe.

Un ressort d'ouverture 10 prend appui contre le corps de préhension 2 et contre une extrémité d'appui 11 de l'organe mobile formant pince 4, opposée à l'extrémité de serrage 5, et sollicite en permanence l'organe mobile formant pince 4 vers sa position ouverte.

Dans le présent exemple, quand le levier 7 est dans sa position escamotée, il est complètement située dans le corps de préhension 2 de façon à ne pas pouvoir être manoeuvré par l'utilisateur.

Le dispositif de préhension amovible 1 comprend des moyens de déplacement 6 qui sont adaptés à déplacer l'organe mobile formant pince 4 par rapport au corps de préhension 2.

Ces moyens de déplacement 6 comprennent un levier 7 qui est monté mobile en rotation autour d'un axe de rotation 8 par rapport au corps de préhension 2 entre une position déployée (figure 3) et une positon escamotée (figure 2). L'axe de rotation 8 est normal à la direction longitudinale du corps de préhension 2 et est situé à proximité de l'organe fixe formant pince 3 et à proximité d'une première extrémité du levier 7.

Quand le levier 7 est en position déployée, l'organe mobile formant pince 4 est en position ouverte, et quand il est en position escamotée, l'organe mobile formant pince 4 est en position fermée.

Les moyens de déplacement 6 comprennent aussi un moyen de transmission 9 qui s'étend entre le levier 7 et l'organe mobile formant pince 4 et qui est adapté à déplacer l'organe mobile formant pince 4 en translation quand le levier 7 est pivoté.

Dans l'exemple illustré aux figures 1 à 3, le moyen de transmission 9 est une bielle 9, et les moyens de déplacement 6 sont agencés selon une relation en genouillère : les moyens de déplacement 6 sont conformés de sorte que, le levier 7 est dans une position d'équilibre stable quand il est en position déployée et quand il est en position escamotée, et il passe par une position d'équilibre instable (définie par la droite d'équilibre des moyens de déplacement 6) quand il passe de l'une à l'autre de ses deux positions d'équilibre stable.

Par rapport à l'organe mobile formant pince 4, la bielle 9 est mobile en rotation autour d'un axe de pivotement 12 qui est adjacent à l'extrémité d'appui 11 de l'organe mobile formant pince 4 et à une première extrémité de la bielle 9.

Par rapport au levier 7, la bielle 9 est mobile en rotation autour d'un arbre 13. Afin de permettre la relation en genouillère, l'arbre 13 est monté mobile en translation dans une fente 14 qui est réalisée dans la bielle 9 et qui s'étend dans la direction longitudinale de celle-ci. L'arbre 13 est mobile entre une position d'équilibre instable dans laquelle l'arbre 13 est situé sur la droite d'équilibre du mécanisme à genouillère qui est définie par l'axe de rotation 8 et l'axe de pivotement 12 et une position d'équilibre stable dans laquelle le levier 7 est soit dans sa position déployée (l'arbre 13 étant situé du côté dit d'ouverture de la droite d'équilibre), soit dans sa position escamotée (l'arbre 13 étant situé du côte dit de fermeture de la droite d'équilibre).

Un ressort de genouillère 15 sollicite en permanence l'arbre 13 en direction de sa position d'équilibre stable.

Quand l'arbre 13 est situé du côté d'ouverture de la droite d'équilibre, le ressort d'ouverture 10 sollicite, d'une part, l'organe mobile formant pince 4 vers sa position ouverte et, d'autre part, le levier 7 vers sa position déployée par l'intermédiaire de la bielle 9.

Quand l'arbre 13 est situé du côté de fermeture de la droite d'équilibre, le ressort d'ouverture 10 sollicite le levier 7 vers sa position escamotée et plaque, d'une part, le levier 7 contre le corps de préhension 2, et, d'autre part, la bielle 9 contre l'organe mobile formant pince 4, le ressort de genouillère 15 se trouvant orienté selon une direction très proche de celle du ressort d'ouverture 10. De ce fait, le ressort de genouillère 15 qui sollicite l'arbre 13 en direction de sa position d'équilibre, impose à l'organe mobile formant pince 4 une translation vers sa position fermée, malgré la présence du ressort d'ouverture 10.

Quand un utilisateur veut pincer le rebord d'un récipient, il positionne le rebord entre l'organe fixe formant pince 3 et l'extrémité de serrage 5 de l'organe mobile formant pince 4 en position ouvert, et il fait pivoter le levier 7 de sa position déployée vers sa position escamotée. La rotation du levier 7 entraîne la rotation de la bielle 9 et la translation de l'organe mobile formant pince 4, l'arbre 13 franchissant alors la droite d'équilibre du mécanisme à genouillère, ce qui permet de réaliser un pincement stable du rebord du récipient.

La mobilité de l'arbre 13 dans la fente 14 permet d'ajuster la distance séparant l'extrémité de serrage 5 de l'organe mobile formant pince 4 en position fermée et l'organe fixe formant pince 3 à l'épaisseur du rebord du récipient.

La plage des distances séparant l'extrémité de serrage 5 de l'organe mobile formant pince 4 en position fermée et l'organe fixe formant pince 3 est sensiblement inférieure à l'amplitude de mouvement de l'arbre 13 dans la fente 14 de façon à permettre à l'arbre 13 de passer la droite d'équilibre et à avoir un pincement stable.

Selon le mode de réalisation illustré aux figures 1 à 4, l'arbre 13 est situé à proximité de la deuxième extrémité du levier 7 qui est opposée à la première extrémité proche de l'axe de rotation 8. La fente 14 est réalisée à proximité de la deuxième extrémité de la bielle 9 qui est opposée à la première extrémité proche de l'axe de pivotement 12, l'arbre 13 étant sollicité par le ressort de genouillère 15 vers l'extrémité longitudinale de la fente 14 qui est la plus proche de la deuxième extrémité de la bielle 9.

Par cet agencement particulier des moyens de déplacement 6, le dispositif de préhension 1 peut pincer de façon sûre des rebords de récipient dont l'épaisseur peut varier selon une plage relativement importante (entre 0,5 et 3,5 mm)

De plus, l'utilisation d'un ressort à boudin logé dans la bielle 9 comme ressort de genouillère 15 permet d'éviter tout risque de détérioration du mécanisme à genouillère, bien que la plage des épaisseurs du rebord de récipient pouvant être pincé soit importante.

Par ailleurs, afin de faciliter la prise en main du dispositif de préhension 1, même quand le levier 7 est en position déployée, le levier 7 a une longueur réduite telle que qu'un utilisateur qui a en main le dispositif de préhension 1, a son index et son majeur disposés contre le levier 7 et son annulaire et son auriculaire disposés contre le corps de préhension. De ce fait, l'utilisateur peut libérer le levier 7 de l'emprise réalisée par l'index et le majeur tout en conservant l'annulaire et l'auriculaire pour maintenir le corps de préhension 2. De façon typique, la longueur du levier correspond à la largeur de trois doigts serrés les uns contre les autres (ou environ 7 cm à partir de l'axe de rotation 8, ou encore, environ 6 cm pour la partie du levier pivotant hors du corps de préhension 2.

En outre, l'utilisation d'une bielle 9 de longueur réduite permet d'avoir un levier 7 ayant une faible amplitude de mouvement, rendant encore plus aisée la prise en main du dispositif de préhension 1, même quand le levier 7 est en position déployée.

Ainsi, l'utilisateur n'a pas à changer de prise en main quand le levier 7 passe de sa position déployée vers sa position escamotée, et inversement.

Avantageusement, le levier 7 et la bielle 9 comprennent des parois verticales agencées de sorte que, même quand le levier 7 est en position déployée, l'ensemble du mécanisme est masqué et protégé de tout encrassement.

Selon l'invention, le dispositif de préhension amovible 1 comprend un moyen de blocage 26 qui est adapté à empêcher tout écartement de l'organe mobile formant pince 4 en position fermée.

Dans l'exemple illustré aux figures 1 à 3, le moyen de blocage 26 comprend un pion de blocage 27 qui est monté sur le levier 7 et qui est adapté à pénétrer, quand le levier 7 est en position escamotée, dans un logement dont la section de passage dépend de la position de l'organe mobile formant pince 4 en position fermée, et donc de l'épaisseur du rebord du récipient pincé.

Le logement comprend une cavité 29 qui est réalisée dans le corps de préhension 2, et une lumière 30 qui est réalisée au travers de l'organe mobile formant pince 4. Cette lumière 30 est située sensiblement en face de la cavité 29 quand l'organe mobile formant pince 4 est en position fermée.

La section de passage du logement correspond donc à la partie de la section de passage de la lumière 30 qui est en regard de la section de passage de la cavité 29. Par ailleurs, plus l'épaisseur du rebord du récipient pincé est faible, plus la section de passage du logement est grande quand l'organe mobile formant pince 4 est en position fermée.

Le pion de blocage 27 est monté mobile en translation par rapport au levier 7 et il est sollicité en permanence en direction du logement par un ressort de blocage 31. Le pion de blocage 27 s'évase de sa tête 32 jusqu'à sa base 33 par laquelle il est relié au levier 7 via le ressort de blocage 31.

Quand l'utilisateur pince le rebord du récipient en entraînant le levier 7 vers sa position escamotée, le pion de blocage 27, qui est solidaire du levier 7, est entraîné en direction de l'organe mobile formant pince 4.

Quand le levier 7 est en position escamotée, l'organe mobile formant pince 4 est en position fermée adaptée à l'épaisseur du rebord du récipient pincé. Sous l'action du ressort de blocage 31, le pion de blocage 27 pénètre partiellement dans le logement, de la tête 32 jusqu'à la zone du pion de blocage 27 dont la section correspond à celle du logement : le pion de blocage 27 est plaqué contre le contour de la section de passage du logement par le ressort de blocage 31, empêchant ainsi tout coulissement du l'organe mobile formant pince 4 en position fermée dans le sens d'un logement ayant une section de passage plus important, c'est à dire vers une position fermée adaptée à pincer un récipient ayant un rebord de plus forte épaisseur.

Par ailleurs, afin d'éviter tout basculement du pion de blocage 27 due à la pression exercée par le ressort d'ouverture 10 sur l'organe mobile formant pince 4, quand le levier 7 est en position escamotée, quelque soit l'écart séparant les deux organes formant pince 3,4, le pion de blocage 27 est en appui contre la paroi 50 qui délimite la cavité 29 en direction des organes formant pince 3,4. Ainsi, le pion de blocage 27 reste « droit » ce qui renforce l'immobilisation de l'organe mobile formant pince 4.

Dans le mode de réalisation illustré aux figures 2 et 3, l'évasement du pion de blocage 27 est formé par une paroi rectiligne 51 reliant la tête 32 à la base 33. De ce fait, la section de passage du logement peut être figée quelle qu'elle soit.

Selon le mode de réalisation illustré à la figure 4, l'évasement du pion de blocage 27 est réalisé par une paroi 52 ayant la forme d'un escalier formé de plusieurs marches 53 et reliant la tête 32 à la base 33. Selon ce mode de réalisation, les marches 53 sont orientées perpendiculairement à la direction de translation de l'organe mobile formant pince 4, et, de ce fait, le pion de blocage 27 est peu endommagé par cet organe.

Ce moyen de blocage 26 empêche ainsi tout mouvement d'écartement des organes formant pince en position fermée, notamment celui pouvant se produire par effet de levier causé par le poids du récipient chargé (surtout si le récipient a un rebord de faible épaisseur).

Par ailleurs, le dispositif de préhension amovible 1 comporte des moyens d'actionnement 16 montés de façon mobile en translation sur le corps de préhension 2 selon une direction sensiblement parallèle à la direction longitudinale du corps de préhension 2.

Les moyens d'actionnement 16 sont mobiles entre une positon de repos et une position d'actionnement dans laquelle les moyens de d'actionnement 16 font passer le levier 7 de sa position escamotée à sa position déployée.

Les moyens d'actionnement 16 sont sollicités en permanence vers leur position de repos par un ressort de rappel 17 prenant appui contre le corps de préhension 2 et les moyens d'actionnement 16.

Comme on peut le voir aux figures 1 et 2, le levier 7 comprend une surface d'appui 19, et les moyens d'actionnement 16 comprennent un élément formant plan incliné 18 qui est adapté à venir en butée contre la surface d'appui 19 quand le levier 7 est en position escamotée et les moyens d'actionnement 16 sont en position d'actionnement.

De plus, les moyens d'actionnement 16 comprennent un bouton d'activation 20 qui fait saillie à la surface du dispositif de préhension amovible 1 opposée à celle à laquelle le levier 7 est fixé et qui est adapté à être manoeuvrer par l'utilisateur.

L'organe mobile formant pince 4 _présente une rainure 21 au travers de laquelle le bouton d'activation 20 est solidarisé au plan incliné 18 (le bouton d'activation 20 et le plan incliné 18 sont situés de part et d'autre de l'organe mobile formant pince 4) de sorte que le mouvement de l'organe mobile formant pince 4 ne soit pas gêné par les moyens d'actionnement 16, et réciproquement.

Quand l'utilisateur veut faire passer le levier 7 de sa position escamotée à sa position déployée afin de libérer le récipient des organes formant pince 3,4, il impose aux moyen d'activation 16, par l'intermédiaire du bouton d'activation 20, une translation jusqu'à leur position d'actionnement. Le bouton d'activation 20 permet à l'utilisateur de manoeuvrer les moyens de d'activation 16 sans avoir à changer de prise de main, et uniquement à l'aide du pouce.

Bien évidemment, la présente invention n'est pas limité au mode de réalisation décrit de façon détaillée ci-dessus.

Il serait par exemple possible de réaliser un dispositif de préhension amovible dont le moyen de transmission ne serait pas une bielle.

Il serait aussi possible que le pion de blocage soit monté sur la bielle (ou tout autre moyen de transmission) et non pas sur le levier.

Il serait aussi possible d'avoir un dispositif de préhension amovible, comprenant deux organes formant pince montés sur un corps de préhension, l'un des organes formant pince étant mobile en translation par rapport au corps de préhension, selon une direction sensiblement parallèle à la direction longitudinale du corps de préhension, entre une position ouverte et une position fermée dans laquelle les organes formant pince sont adaptés à pincer un rebord du récipient, le dispositif comprenant aussi des moyens de déplacement qui sont adaptés à déplacer les organes formant pince l'un par rapport à l'autre, qui comportent un levier monté mobile en rotation par rapport au corps de préhension entre une position déployée et une positon escamotée dans laquelle l'organe mobile formant pince est en position fermée, et un moyen de transmission s'étendant entre le levier et l'organe mobile formant pince et adapté à déplacer l'organe mobile formant pince en translation quand le levier est pivoté, caractérisé en ce que le levier a une faible longueur (tel que décrit plus haut, c'est à dire permettant la prise en main du corps de préhension derrière le levier par au moins l'auriculaire et l'annulaire), ce qui permet de ne pas à avoir à changer de prise de main que le levier soit dans sa position déployée ou dans sa position escamotée. De préférence, les moyens de transmission (telle que la bielle) sont articulés à l'extrémité du levier opposée à l'extrémité par laquelle il est articulé au corps de préhension. Un tel dispositif de préhension pourrait évidemment être muni des différentes caractéristiques particulières énoncées dans la présente demande.

## Revendications

1. Dispositif de préhension amovible (1) pour récipient, comprenant :
- deux organes formant pince (3,4) montés sur un corps de préhension (2), l'un des organes formant pince (4) étant mobile en translation par rapport au corps de préhension (2), selon une direction sensiblement parallèle à la direction longitudinale du corps de préhension (2), entre une position ouverte et une position fermée dans laquelle les organes formant pince (3,4) sont adaptés à pincer un rebord du récipient,
- des moyens de déplacement (6) qui sont adaptés à déplacer les organes formant pince (3,4) l'un par rapport à l'autre, qui comportent un levier (7) monté mobile en rotation par rapport au corps de préhension (2) entre une position déployée et une positon escamotée dans laquelle l'organe mobile formant pince (4) est en position fermée, et un moyen de transmission (9) s'étendant entre le levier (7) et l'organe mobile formant pince (4) adapté à déplacer l'organe mobile formant pince (4) en translation quand le levier (7) est pivoté, et qui sont adaptés à ajuster la distance séparant les deux organes formant pince (3,4) en position fermée à l'épaisseur du récipient pincé quand le levier (7) est dans sa position escamotée, et
- un moyen de blocage (26) adapté à empêcher tout écartement de l'organe mobile formant pince (4) quand l'organe mobile formant pince (4) est en position fermée,
**caractérisé en ce que** le moyen de blocage (26) comprend un pion de blocage (27) monté sur les moyens de déplacement (6) et adapté à pénétrer dans un logement (29,30) quand le levier (7) est en position escamotée.

2. Dispositif de préhension amovible (1) selon la revendication 1, **caractérisé en ce que** le logement (29,30) a une section de passage qui dépend de la position de l'organe mobile formant pince (4) en position fermée.

3. Dispositif de préhension amovible (1) selon la revendication 2, **caractérisé en ce que** le logement (29,30) comprend une cavité (29) réalisée dans le corps de préhension (2) et une lumière (30) réalisée au travers de l'organe mobile formant pince (4).

4. Dispositif de préhension amovible (1) selon la revendication 3, **caractérisé en ce que** la lumière (30) est située sensiblement en face de la cavité (29) quand l'organe mobile formant pince (4) est dans une position fermée.

5. Dispositif de préhension amovible (1) selon l'une des revendications 2 à 4, **caractérisé en ce que** la section de passage du logement (29,30) est d'autant plus importante que les deux organes formant pince (3,4) sont proches l'un de l'autre quand ils sont en position fermée.

6. Dispositif de préhension amovible (1) selon l'une des revendications 1 à 5, **caractérisé en ce que** le pion de blocage (27) est monté sur le levier (7).

7. Dispositif de préhension amovible (1) selon, la revendication 6, **caractérisé en ce que** le pion de blocage (27) est mobile en translation par rapport au levier (7) et est sollicité en direction du logement (29,30) par un ressort de blocage (31).

8. Dispositif de préhension amovible (1), selon les revendications 3 et 7, **caractérisé en ce que**, quand le levier (7) est en position escamotée, quelque soit l'écart séparant les deux organes formant pince (3,4), le pion de blocage (27) est en appui contre la paroi délimitant la cavité (29) en direction des organes formant pince (3,4).

9. Dispositif de préhension amovible (1) selon l'une des revendication 1 à B, **caractérisé en ce que** le pion de blocage (27) s'évase de sa tête (32) jusqu'à sa base (33) par laquelle il est relié au moyen de déplacement (6).

10. Dispositif de préhension amovible (1) selon la revendication 9, **caractérisé en ce que** l'évasement du pion de blocage (27) est formé par une paroi rectiligne reliant la tête (32) à la base (33).

11. Dispositif de préhension amovible (1) selon la revendication 9, **caractérisé en ce que** l'évasement du pion de blocage (27) est réalisé par une paroi ayant la forme d'un escalier formé de plusieurs marches et reliant la tête (32) à la base (33).

12. Dispositif de préhension amovible (1) selon l'une des revendications 1 à 11, **caractérisé en ce que** les moyens de déplacement (6) sont conformés de sorte que le levier (7) est dans une position d'équilibre stable tant en position escamotée qu'en position déployée, et passe par une position intermédiaire d'équilibre instable quand il pivote de l'une à l'autre de ses deux positions d'équilibre stable.

13. Dispositif de préhension amovible (1) selon l'une des revendications 1 à 12, **caractérisé en ce qu'**un ressort (15) adapté à agir sur l'organe mobile (4) de façon à permettre l'ajustement de la distance séparant les deux organes formant pince (3,4), est logé dans le moyen de transmission (9).

14. Dispositif de préhension amovible (1) selon l'une des revendications 1 à 13, **caractérisé en ce que** les moyens de transmission (9) sont formées par une bielle (9) qui est monté mobile en rotation par rapport au levier (7) et par rapport à l'organe mobile formant pince (4).

15. Dispositif de préhension amovible (1) selon la revendication 14, **caractérisé en ce que** la bielle (9) est monté rotative sur le levier (7) par l'intermédiaire d'un arbre (13) qui est situé à proximité de l'extrémité du levier (7) opposée à l'extrémité par laquelle le levier (7) est relié au corps de préhension (2).

16. Dispositif de préhension amovible (1) selon l'une des revendications 1 à 15, **caractérisé en ce que** la longueur du levier (7) correspond à la largueur de trois doigts serrés les uns contre les autres.

17. Dispositif de préhension amovible (1) selon l'une des revendications 1 à 16, **caractérisé en ce que** les longueurs du levier (7) et du corps de préhension (2) sont telles qu'un utilisateur ayant en main le dispositif de préhension (1), a son index et son majeur disposés contre le levier (7) et son annulaire et son auriculaire disposés contre le corps de préhension (2).

## Claims

1. Removable gripping device (1) for a container, comprising:
- two gripper-forming members (3, 4) which are mounted on a gripping body (2), one of the gripper-forming members (4) being able to move in translation with respect to the gripping body (2) in a direction substantially parallel to the longitudinal direction of the gripping body (2), between an open position and a closed position in which the gripper-forming members (3, 4) are able to grip an edge of the container,
- displacement means (6) which are able to displace the gripper-forming members (3, 4) with respect to one another, which displacement means comprise a lever (7) which is mounted to move in rotation with respect to the gripping body (2) between an extended position and a retracted position in which the movable gripper-forming member (4) is in the closed position, and a transmission means (9) which extends between the lever (7) and the movable gripper-forming member (4) and is able to displace the movable gripper-forming member (4) in translation when the lever (7) is pivoted, and said displacement means being able to adjust the distance separating the two gripper-forming members (3, 4) in the closed position to the thickness of the gripped container when the lever (7) is in its retracted position, and
- a locking means (26) which is able to prevent any movement of the movable gripper-forming member (4) when the movable gripper-forming member (4) is in the closed position,
**characterised in that** the locking means (26) comprises a locking pin (27) which is mounted on the displacement means (6) and is able to penetrate into a housing (29, 30) when the lever (7) is in the retracted position.

2. Removable gripping device (1) according to Claim 1, **characterised in that** the housing (29, 30) has a passage cross section which depends on the position of the movable gripper-forming member (4) in the closed position.

3. Removable gripping device (1) according to Claim 2, **characterised in that** the housing (29, 30) comprises a cavity (29) formed in the gripping body (2) and a slot (30) formed through the movable gripper-forming member (4).

4. Removable gripping device (1) according to Claim 3, **characterised in that** the slot (30) is located essentially facing the cavity (29) when the movable gripper-forming member (4) is in a closed position.

5. Removable gripping device (1) according to any of Claims 2 to 4, **characterised in that** the passage cross section of the housing (29, 30) is all the larger, the closer the two gripper-forming members (3, 4) are to one another when they are in the closed position.

6. Removable gripping device (1) according to any of Claims 1 to 5, **characterised in that** the locking pin (27) is mounted on the lever (7).

7. Removable gripping device (1) according to Claim 6, **characterised in that** the locking pin (27) is able to move in translation with respect to the lever (7) and is biased in the direction of the housing (29, 30) by a locking spring (31).

8. Removable gripping device (1) according to Claims 3 and 7, **characterised in that**, when the lever (7) is in the retracted position, regardless of the distance separating the two gripper-forming members (3, 4), the locking pin (27) bears against the wall delimiting the cavity (29) in the direction of the gripper-forming members (3, 4).

9. Removable gripping device (1) according to any of Claims 1 to 8, **characterised in that** the locking pin (27) is flared from its head (32) to its base (33), by which it is connected to the displacement means (6).

10. Removable gripping device (1) according to Claim 9, **characterised in that** the flaring of the locking pin (27) is formed by a straight wall connecting the head (32) to the base (33).

11. Removable gripping device (1) according to Claim 9, **characterised in that** the flaring of the locking pin (27) is formed by a wall having the shape of a staircase formed of several steps and connecting the head (32) to the base (33).

12. Removable gripping device (1) according to any of Claims 1 to 11, **characterised in that** the displacement means (6) are shaped such that the lever (7) is in a stable equilibrium position both in the retracted position and in the extended position, and passes through an intermediate unstable equilibrium position as it pivots from one to the other of its two stable equilibrium positions.

13. Removable gripping device (1) according to any of Claims 1 to 12, **characterised in that** a spring (15) which is able to act on the movable member (4) so as to allow the adjustment of the distance separating the two gripper-forming members (3, 4) is housed in the transmission means (9).

14. Removable gripping device (1) according to any of Claims 1 to 13, **characterised in that** the transmission means (9) are formed by a connecting rod (9) which is mounted to move in rotation with respect to the lever (7) and with respect to the movable gripper-forming member (4).

15. Removable gripping device (1) according to Claim 14, **characterised in that** the connecting rod (9) is mounted to rotate on the lever (7) via a shaft (13) which is located close to that end of the lever (7) which is opposite the end by which the lever (7) is connected to the gripping body (2).

16. Removable gripping device (1) according to any of Claims 1 to 15, **characterised in that** the length of the lever (7) corresponds to the width of three fingers held next to one another.

17. Removable gripping device (1) according to any of Claims 1 to 16, **characterised in that** the lengths of the lever (7) and of the gripping body (2) are such that a user holding the gripping device (1) in his hand has his index finger and middle finger against the lever (7) and his ring finger and little finger against the gripping body (2).

## Patentansprüche

1. Abnehmbare Greifvorrichtung (1) für ein Behältnis, mit:
- zwei Zangenelementen (3, 4), die an einem Greifkörper (2) angebracht sind, wobei ein Zangenelement (4) in Bezug zu dem Greifkörper (2) in einer im Wesentlichen zur Längsrichtung des Greifkörpers (2) parallelen Richtung, zwischen einer Öffnungsposition und einer Schließposition, in welcher die Zangenelemente (3, 4) einen Rand des Behältnisses angreifen können, translatorisch bewegbar ist,
- einer Verstelleinrichtung (6), welche die Zangenelemente (3, 4) zueinander verschieben kann, die aufweist einen Hebel (7), der in Bezug zum Greifkörper (2) zwischen einer ausgefahrenen Position und einer eingezogenen Position, in welcher sich das bewegliche Zangenelement (4) in einer Schließstellung befindet, drehbeweglich angebracht ist, und ein Übertragungselement (9), das sich zwischen dem Hebel (7) und dem beweglichen Zangenelement (4) erstreckt und das bewegliche Zangenelement (4) translatorisch verschieben kann, wenn der Hebel (7) geschwenkt wird, und die so ausgebildet ist, dass sie den Abstand zwischen den beiden Zangenelementen (3, 4) in Schließstellung auf eine Dicke des angegriffenen Behältnisses einstellt, wenn sich der Hebel (7) in seiner eingezogenen Position befindet, und
- einer Sperreinrichtung (26), die jegliches sich in Abstand bewegen des beweglichen Zangenelements (4) verhindern kann, wenn sich das bewegliche Zangenelement (4) in der Schließstellung befindet,
**dadurch gekennzeichnet, dass** die Sperreinrichtung (26) ein Sperrstück (27) aufweist, das an der Verstelleinrichtung (6) angebracht ist und so ausgebildet ist, dass es in eine Aufnahme (29, 30) eintreten kann, wenn sich der Hebel (7) in einer eingezogenen Stellung befindet.

2. Abnehmbare Greifvorrichtung (1) nach Anspruch 1, **dadurch gekennzeichnet, dass** die Aufnahme (29, 30) eine Durchgangsweite hat, die von der Position des Zangenelements (4) in Schließstellung abhängig ist.

3. Annehmbare Greifvorrichtung (1) nach Anspruch 2, **dadurch gekennzeichnet, dass** die Aufnahme (29, 30) umfasst einen Hohlraum (29), der in dem Greifkörper (2) ausgebildet ist, und eine Öffnung (30), die durchgehend in dem beweglichen Zangenelement (4) ausgebildet ist.

4. Abnehmbare Greifvorrichtung (1) nach Anspruch 3, **dadurch gekennzeichnet, dass** die Öffnung (30) im Wesentlichen gegenüber dem Hohlraum (29) liegt, wenn sich das bewegliche Zangenelement (4) in einer Schließstellung befindet.

5. Abnehmbare Greifvorrichtung (1) nach einem der Ansprüche 2 bis 4, **dadurch gekennzeichnet, dass** die Durchgangsweite der Aufnahme (29, 30) um so größer ist, je näher die zwei Zangenelemente (3, 4) aneinander liegen, wenn sie sich in der Schließstellung befinden.

6. Abnehmbare Greifvorrichtung (1) nach einem der Ansprüche 1 bis 5, **dadurch gekennzeichnet, dass** das Sperrstück (27) an dem Hebel (7) angebracht ist.

7. Abnehmbare Greifvorrichtung (1) nach Anspruch 6, **dadurch gekennzeichnet, dass** das Sperrstück (27) in Bezug zu dem Hebel (7) translatorisch beweglich ist und in Richtung der Aufnahme (29, 30) durch eine Sperrfeder (31) vorgespannt ist.

8. Abnehmbare Greifvorrichtung (1) nach den Ansprüchen 3 bis 7, **dadurch gekennzeichnet, dass**, wenn sich der Hebel (7) in der eingezogenen Position befindet, das Sperrstück (27) unabhängig von dem Abstand, der die beiden Zangenelemente (3, 4) trennt, an die den Hohlraum (29) in Richtung der Zangenelemente (3, 4) begrenzende Wand anstößt.

9. Abnehmbare Greifvorrichtung (1) nach einem der Ansprüche 1 bis 8, **dadurch gekennzeichnet, dass** sich das Sperrstück (27) von seinem Kopf (32) aus bis zu seiner Basis (33), mit welcher dieses mit der Verstelleinrichtung (6) verbunden ist, erweitert.

10. Abnehmbare Greifvorrichtung (1) nach Anspruch 9, **dadurch gekennzeichnet, dass** die Erweiterung des Sperrstücks (27) durch eine geradlinige Wand gebildet wird, die den Kopf (32) mit der Basis (33) verbindet.

11. Abnehmbare Greifvorrichtung (1) nach Anspruch 9, **dadurch gekennzeichnet, dass** die Erweiterung des Sperrstücks (27) durch eine Wand gebildet wird, welche die Form einer Treppe aufweist, die aus mehreren Stufen gebildet ist und den Kopf (32) mit der Basis (33) verbindet.

12. Abnehmbare Greifvorrichtung (1) nach einem der Ansprüche 1 bis 11, **dadurch gekennzeichnet, dass** die Verstelleinrichtung (6) derart ausgebildet ist, dass sich der Hebel (7) sowohl in der eingezogenen Stellung als auch in der ausgefahrenen Stellung in einer stabilen Gleichgewichtsstellung befindet und eine Zwischenposition mit instabilem Gleichgewicht passiert, wenn er von der einen seiner stabilen Gleichgewichtspositionen in die andere schwenkt.

13. Abnehmbare Greifvorrichtung (1) nach einem der Ansprüche 1 bis 12, **dadurch gekennzeichnet, dass** eine Feder (15), die so ausgebildet ist, dass sie auf das bewegliche Element (4) einwirken kann, um so die Einstellung des Abstands zu ermöglichen, welcher die beiden Zangenelemente (3, 4) trennt, in dem Übertragungselement (9) angeordnet ist.

14. Abnehmbare Greifvorrichtung (1) nach einem der Ansprüche 1 bis 13, **dadurch gekennzeichnet, dass** das Übertragungselement (9) durch ein Zwischenglied (9) gebildet wird, das in Bezug zum Hebel (7) und in Bezug zu dem beweglichen Zangenelement (4) drehbeweglich angebracht ist.

15. Abnehmbare Greifvorrichtung (1) nach Anspruch 14, **dadurch gekennzeichnet, dass** das Zwischenglied (9) auf dem Hebel (7) mit Hilfe einer Welle (13) drehbar montiert ist, die in der Nähe des Endes des Hebels (7) angeordnet ist, das dem Ende, mit welchem der Hebel (7) mit dem Greifkörper (2) verbunden ist, entgegen gesetzt ist.

16. Abnehmbare Greifvorrichtung (1) nach einem der Ansprüche 1 bis 15, **dadurch gekennzeichnet, dass** die Länge des Hebels (7) der Breite von drei Fingern entspricht, die aneinander gedrückt sind.

17. Abnehmbare Greifvorrichtung (1) nach einem der Ansprüche 1 bis 16, **dadurch gekennzeichnet, dass** die Längen des Hebels (7) und des Greifkörpers (2) derart sind, dass ein Benutzer, der die Greifvorrichtung (1) in der Hand hat, seinen Zeigefinger und seinen Mittelfinger an dem Hebel (7) und seinen Ringfinger und seinen kleinen Finger an dem Greifkörper (2) zu liegen hat.
